(19)

Europäisches
Patentamt
European
Patent Office
Office européen
des brevets

(11) **EP 3 716 138 A1**

(12) **EUROPEAN PATENT APPLICATION**

(43) Date of publication:
**30.09.2020  Bulletin 2020/40**

(51) Int Cl.:
*G06K 9/00* (2006.01)　　　*G06K 9/46* (2006.01)

(21) Application number: **19166239.4**

(22) Date of filing: **29.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Zenuity AB**
**417 56 Göteborg (SE)**

(72) Inventor: **WRANNE, Staffan**
**435 43 Pixbo (SE)**

(74) Representative: **Zacco Sweden AB**
**P.O. Box 5581**
**114 85 Stockholm (SE)**

(54) **ROAD BOUNDARY DETERMINATION**

(57)　　　A method for determining a road boundary representation for a vehicle (1) positioned on a road is disclosed. The method comprises receiving sensor data comprising information about a surrounding environment of the vehicle, forming a reference representation model (3a, 3b, 3c) for each of a plurality of road references (2a, 2b, 2c) based on the received sensor data, wherein each reference representation model is indicative of a road reference geometry and comprises at least one reference component (12), each reference component being associated with a component class, assigning a weight to each reference component, forming a master reference model (5) indicative of the road boundary representation, the master reference model comprising a corresponding master component (13) for each component class, updating the master reference model (5) by updating each master component (13) based on the reference components (12) and the assigned weights within a common component class.

*Fig. 2*

**Description**

TECHNICAL FIELD

The present invention relates to methods and control devices for determining a road boundary representation for a vehicle positioned on a road.

BACKGROUND ART

During these last few years, the development of autonomous vehicles has exploded and many different solutions are being explored. Today, development is ongoing in both autonomous driving (AD) and advanced driver-assistance systems (ADAS), i.e. semiautonomous driving, within a number of different technical areas within these fields. One such area is how to position the vehicle with accuracy and consistency since this is an important safety aspect when the vehicle is moving within traffic.

Road departures are a critical issue in both AD and ADAS systems and proper solutions to mitigate the risk of road departures are of utmost importance, moreover, road edge interventions are a part of EuroNCAP Lane Support System (LSS) rating. Generally, lane support systems are classified in two subcategories lane departure warning and lane keep assist, which are designed to assist and warn drivers when one unintentionally leaves the road lane or when one changes lanes without indication.

However, all lane support systems or any other steering system, precise and reliable detection of the road geometry is a key function. Conventional solutions are based on the idea of tracking a road reference (e.g. a lane marking) and adding an offset in order to estimate a location of the road edge relative to the vehicle. More specifically, currently known solutions include logics for first deciding what reference to use (left lane markings, right lane markings, other landmarks, other vehicles, etc.) and if tracking of the selected reference was lost during an intervention the intervention would be aborted, or a swap to another reference had to be performed (which would require more logics). Not only is there a safety risk involved with aborting an intervention or forcing the LSS to switch to a different reference, but the user experience is also impaired. In view of upcoming stricter requirements for Lane Support Systems, and the general objective in the automotive industry for providing reliable and cost effective solutions there is a need for new and improved solutions which mitigate the problems associated with currently known systems, and preferably without increasing costs.

SUMMARY OF THE INVENTION

It is therefore an object of the present invention to provide a method for determining a road boundary representation, a corresponding non-transitory computer-readable storage medium, a vehicle control system, and a vehicle which alleviate all or at least some of the drawbacks of presently known systems.

In more detail, it is an object of the present invention to provide a stable and cost-effective solution for tracking a road edge suitable for implementation in lane support systems for vehicles.

This/These object(s) is achieved by means of a method, a non-transitory computer-readable storage medium, a vehicle control system, and a vehicle, as defined in the appended claims. The term exemplary is in the present context to be understood as serving as an instance, example or illustration.

According to a first aspect of the present disclosure, there is provided a method for determining a road boundary representation for a vehicle positioned on a road. The method comprises receiving sensor data comprising information about a surrounding environment of the vehicle, forming a reference representation model for each of a plurality of road references based on the received sensor data. Each reference representation model is indicative of a road reference geometry and comprises at least one reference component, where each reference component is associated with a component class. The method further comprises assigning a weight to each reference component, forming a master reference model indicative of the road boundary representation, the master reference model comprising a corresponding master component for each component class. Further, the method comprises updating the master reference model by updating each master component based on the reference components and the assigned weights within a common component class.

An advantage of the proposed method is that the need for using logics to select one of a plurality of road references is alleviated, as opposed to prior known solutions. Moreover, in previously known solutions, if tracking of "the selected" road reference was lost during an intervention, that intervention would be aborted, or a swap to a new road reference had to be performed (adding more logics and costs to the system). Moreover, an abrupt change to a new reference in the middle of an intervention or an abortion of the initiated intervention may lead to abrupt and less comfortable manoeuvres, which can lead to reduced function performance (i.e. the function having problems keeping the vehicle on the road), as well as impaired user experience. An intervention is in the present context a vehicle manoeuvre originating from e.g. a lane support system (LSS) in order to steer the vehicle back onto the road if it was determined that the vehicle was at risk of driving off the road.

Instead, the proposed method relies on forming a combined reference (master reference), so that any logics associated with selecting or swapping a road reference is removed. Moreover, if a dead-reckoning filter is employed, a smooth degrading steering performance as some of the tracked references are "lost" can be achieved. Moreover, the filter also adds the advantage of providing road boundary estimations even if all references are "lost" in order to for example complete an intervention (e.g. steering the vehicle back onto the road).

Further, according to an exemplary embodiment of the present disclosure, the method further comprises for each component class, forming a component candidate having an associated quality value based on the reference components and the assigned weights within a common component class, wherein the step of updating each master component is further based on each formed component candidate and the associated quality value(s) within a common component class.

Moreover, in accordance with another exemplary embodiment of the present disclosure, the step of forming a component candidate comprises, for each component class, forming a weighted sum of each reference component and the assigned weight within a common component class.

According to a second aspect of the present disclosure, there is provided a non-transitory computer-readable storage medium storing one or more programs configured to be executed by one or more processors of a vehicle control system, the one or more programs comprising instructions for performing the method according to any one of the preceding claims. With this aspect of the invention, similar advantages and preferred features are present as in the previously discussed first aspect of the invention.

Still further, according to a third aspect of the present invention, there is provided a vehicle control device. The vehicle control device comprises at least one processor, and may further comprise at least one memory, at least one sensor interface, and at least one communication interface. The at least one processor is configured to execute instructions stored in the memory to perform a method for determining a road boundary representation for a vehicle positioned on a road. In more detail, the at least one processor is configured to receive sensor data comprising information about a surrounding environment of the vehicle, form a reference representation model for each of a plurality of road references based on the received sensor data. Each reference representation model is indicative of a road reference geometry and comprises at least one reference component, where each reference component is associated with a component class. The at least one processor is further configured to assign a weight to each reference component, form a master reference model indicative of the road boundary representation, the master reference model comprising a corresponding master component for each component class. Further, the at least one processor is configured to update the master reference model by updating each master component based on the reference components and the assigned weights within a common component class. With this aspect of the invention, similar advantages and preferred features are present as in the previously discussed first aspect of the invention.

According to a fourth aspect of the present disclosure there is provided a vehicle comprising a vehicle control device according to any one of the embodiments disclosed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

BRIEF DESCRIPTION OF THE DRAWINGS

Further objects, features and advantages of embodiments of the invention will appear from the following detailed description, reference being made to the accompanying drawings, in which:

Fig. 1 is a schematic flow chart representation of a method for determining a road boundary representation for a vehicle positioned on a road according to an embodiment of the present disclosure.

Fig. 2 is a schematic process chart representation of a method for determining a road boundary representation for a vehicle positioned on a road according to an embodiment of the present disclosure.

Fig. 3 is a schematic side view illustration of a vehicle comprising a vehicle control device according to an embodiment of the present disclosure.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

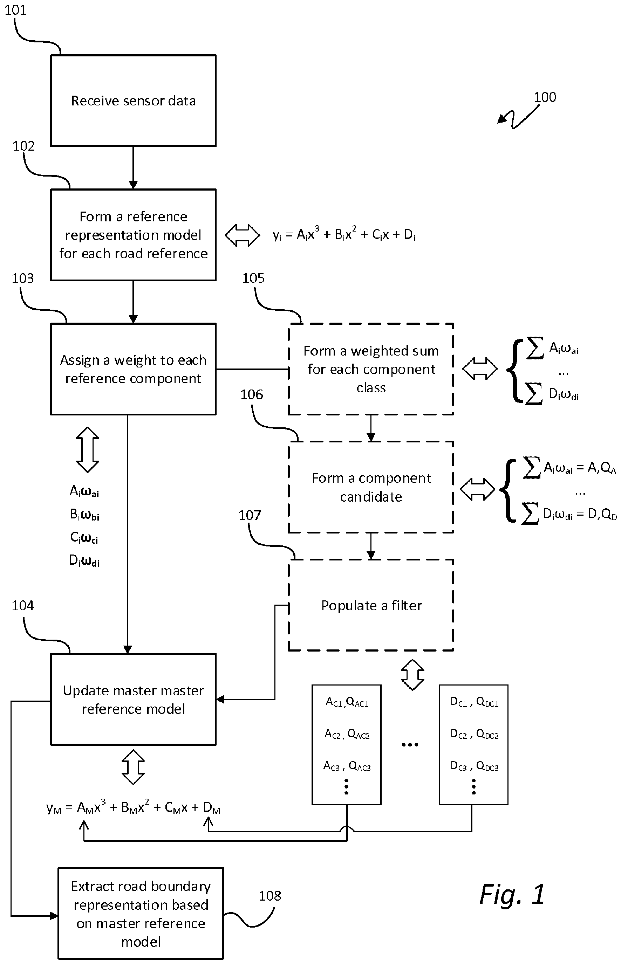

Fig. 1 is a schematic flow chart representation of a method 100 for determining a road boundary representation for a vehicle position on a road. A road boundary is in the present context to be understood as an edge portion of the road and in some contexts be referred to as a road edge. Nevertheless, a road boundary may in some exemplary embodiments be a road edge, a barrier, a curb, a tree line, a ditch, or any other structure defining the edge portion of the road.

The below presented method 100 serves the purpose of generating and updating a "master reference model", which is based on all (by the vehicle control system) tracked road references, in order to be able provide more accurate and stable road boundary tracking for the vehicle. The general objective is to improve the road safety by providing more accurate and stable road boundary tracking such that the quality and reliability of interventions initiated by any lane support system (LSS) or any other steering system configured to control a lateral position of the vehicle on the road is improved.

The method 100 comprises receiving 101 sensor data comprising information about a surrounding environment of the vehicle. The sensor data may for example be acquired by the vehicle's perception system comprising one or more cameras, LIDARs, RADARs, ultrasonic sensors, as known in the art. Thus, the sensor data may comprise one or more detections of (e.g. images) of various road references. Next, a reference representation model is formed 102 for each road reference based on the received sensor data, in the present example the model is in the form of a third order polynomial equation:

$$y_i = A_i x^3 + B_i x^2 + C_i x + D_i \qquad (1)$$

where i denotes the index of the road reference (e.g. left lane marker, right lane marker, the actual road boundary, guideposts, other vehicles, etc.). The polynomial equation (1) describes a geometry of the associated road reference (e.g. lane marking) in the vehicle coordinate system. An alternative reference representation model is to describe the road reference geometry with a clothoid having a lateral offset ($\Delta L$) from the road boundary/edge, a heading ($\alpha$), a curvature ($c_0$), and a curvature rate ($c_1$). However, the road reference geometry modelled as a clothoid can be approximated by the following third order polynomial:

$$y(x) = \frac{c_1}{6} x^3 + \frac{c_0}{2} x^2 + \alpha x + \Delta L \qquad (2)$$

Thus, the reference components $A_i$, $B_i$, $C_i$, and $D_i$ can be considered to represent a curvature rate, a curvature, a heading, and a lateral offset, respectively. Each respective component can be considered to be part of a component class, e.g. a first component class comprises all of the reference components indicating a curvature rate ($A_i$), while a second component class comprises all of the reference components indicating a lateral offset ($D_i$). Thus, if for example three separate road references are tracked (e.g. left lane markers, right lane markers, and a road edge) and represented by analogous reference representation models, each component class will comprise three separate reference components. As the skilled reader readily realizes, the reference models can be represented in other coordinate systems (e.g. polar coordinate systems) and with other choices of origin without departing from the scope from the present disclosure.

Moving on, the method 100 comprises assigning 103 a weight ($\omega$) to each reference component (e.g. $A_i$, $B_i$, $C_i$, and $D_i$). A master reference model is formed, and updated based on the reference components and the assigned weights. In more detail, the master reference model is indicative of the road boundary representation, and represented by an analogous model as the tracked road reference (e.g. a third degree polynomial). Thus, the master reference model has a corresponding master component for each component class. The master reference model is accordingly updated 104 by updating each master component based on the corresponding reference component(s) and the assigned weight(s) in the common component class. Accordingly, the master reference model may be represented as follows.

$$y_M = A_M x^3 + B_M x^2 + C_M x + D_M \qquad (3)$$

The method 100 may further comprise a step of generating/extracting 108 the road boundary representation based on the master reference model (3). Further, according to exemplary embodiment of the present disclosure, the method 100 may further comprise forming 105 a weighted sum of each reference component and the assigned weight within a common component class:

$$\sum_{i=1}^{N} A_i w_i \qquad (4)$$

$$\sum_{i=1}^{N} B_i w_i \qquad (5)$$

$$\sum_{i=1}^{N} C_i w_i \qquad (6)$$

$$\sum_{i=1}^{N} B_i w_i \qquad (7)$$

Then, based on these weighted sums (4) - (7), a component candidate (Ac, Be, Cc, Dc) having an associated quality value ($Q_{AC}$, $Q_{BC}$, $Q_{CC}$, $Q_{DC}$,) is formed 106. In more detail, each weighted sum is computed and a component candidate plus quality value is generated for each of a plurality of time frame of the sensor data. Thus, for each set of sensor data (associated with a time $t_i$) a new set of component candidates is generated in continuous or discrete steps while the road references are tracked.

The assigned quality value for each component candidate is determined based on at least one of a sensor type, a position of road reference relative to the vehicle, sensor quality data, a tracking time of an associated road reference, a tracking stability of the associated road reference, a tracking status of the associated road reference, a reference type, a latency, and an origin of the sensor data. Moreover, the quality value of each component candidate can be indirectly dependent on the above-mentioned features (sensor type, data quality, etc.), i.e. it is the assigned weights that are determined based on the above-mentioned features and the quality values are subsequently determined based on the assigned weights.

Thus, the method 100 may comprise a combined step of form a component candidate, for each component class, from a weighted sum of each reference component and the assigned weight within a common component class. Accordingly, the method 100 may comprise a step of forming/generating (not shown) a quality value for each formed component candidate.

For example, assuming a scenario with two separate measurements, the first measurement is done such that less noise was incorporated in the sensor data in contrast to the second measurement data that contained more noise, wherefore, assuming everything else is the same, the second measurement would result in one or more component candidates having a lower quality value.

Further, the method 100 can comprise a step of populating 107 a filter with a plurality of formed component candidates and associated quality values for each component class. Thereby, the update 104 of the master reference model can be based on the populated filter and a predefined criteria. The predefined criteria may for example be a function of the quality values of the plurality of component candidates populating the filter, such as e.g. selecting the component candidate having the highest associated quality value to represent the corresponding master reference component. Another alternative is to form a weighted average based on the component candidates populating the filter at a moment in time, the weights being based on the associated quality values, and using this weighted average to represent the corresponding master reference component.

The filter can for example be a dead-reckoning filter which will account for the vehicle's movement. In more detail, the dead-reckoning filter is arranged such that the quality of the data (i.e. the quality values of the component candidates) degrade over time and based on the vehicle's movement. Thus, even if the tracing/tracking of all road references is lost, the filter will still contain candidates (who are degrading "gracefully") such that the master reference model can still be updated, albeit with lower quality data. In other words, if all tracking is lost, the dead reckoning filter will continue to provide a "best possible" estimate of the road boundary.

An advantage of the proposed method is that the need for using logics to select one of a plurality of road references is alleviated, as opposed to prior known solutions. Moreover, in previously known solutions, if tracking of "the selected" road reference was lost during an intervention, that intervention would be aborted, or a swap to a new road reference had to be performed (adding more logics and costs to the system). Moreover, an abrupt change to a new reference in the middle of an intervention or an abortion of the initiated intervention may lead to abrupt and less comfortable manoeuvres, which can lead to reduced function performance (i.e. the function having problems keeping the vehicle on the road), as well as impaired user experience. An intervention is in the present context a vehicle manoeuvre originating from e.g. a lane support system (LSS) in order to steer the vehicle back onto the road if it was determined that the vehicle was at risk of driving off the road.

Instead, the proposed method relies on forming a combined reference (master reference), so that any logics associated with selecting or swapping a road reference is removed. Moreover, if a dead-reckoning filter is employed, a smooth degrading steering performance as some of the tracked references are "lost" can be achieved. Moreover, the filter also adds the advantage of providing road boundary estimations even if all references are "lost" in order to for example complete an intervention (e.g. steering the vehicle back onto the road).

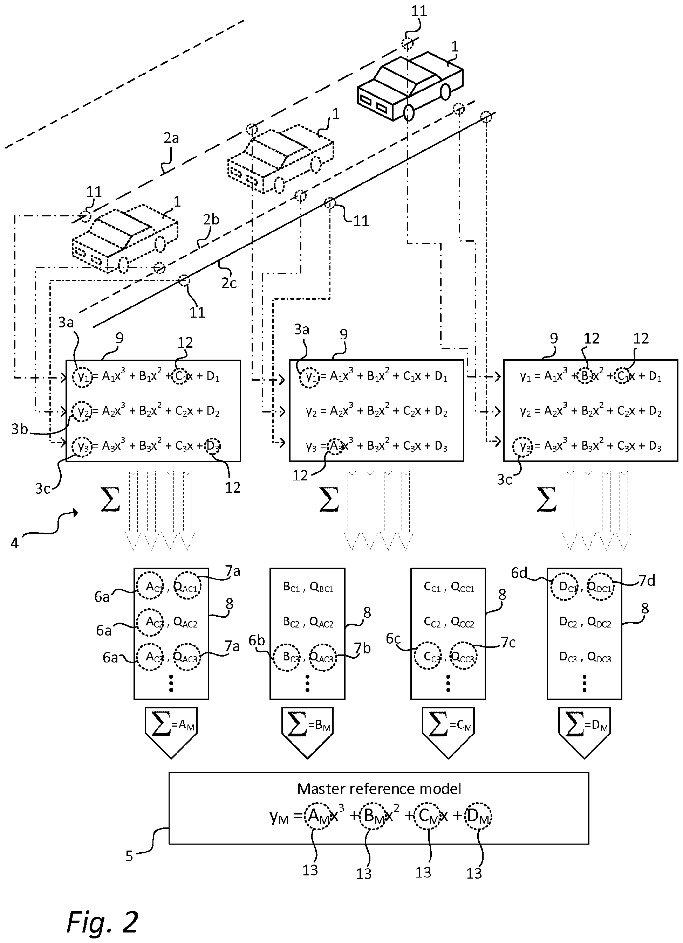

Fig. 2 is a schematic process chart representation of a method for determining a road boundary representation for a vehicle (1) positioned on a road. In general, Fig. 2 serves to further elucidate the working principles of the method discussed in reference to Fig. 1, wherefore many of the above discussed features are, as readily understood by the skilled artisan, analogous and will for the sake of brevity and conciseness not be repeated.

In Fig. 2 a vehicle 1 positioned on a road, the vehicle 1 having a vehicle control device (not shown in Fig. 2) for determining a road boundary representation. The vehicle 1 is illustrated as moving on a road along a straight line, where three road references 2a, 2b, 2c are traced/tracked by the vehicle control device. More specifically, in Fig. 2 the vehicle control device acquires three separate sets of sensor data (e.g. camera images) as the vehicle 1 moves on the road. As the skilled reader readily realizes, the present disclosure is not limited to tracing the illustrated road references of Fig. 2 as other road references (e.g. surrounding vehicles, road barriers, tree lines, land marks, etc.) useable to estimate a road geometry and subsequently a road boundary representation are feasible and within the scope of the present disclosure.

As the vehicle 1 moves along the road, sensor data is collected/received (as indicated by ref. 11). The sensor data comprises information about a surrounding environment of the vehicle. In more detail, the sensor data comprises information about the position and geometry of one or more road references 2a, 2b, 2c in reference to the vehicle 1 (i.e. in the vehicle's coordinate system). Next, a reference representation model 3a, 3b, 3c is formed for each of the plurality of road references 2a, 2b, 2c based on the received sensor data. Each reference representation model 3a, 3b, 3c (here in the form of third degree polynomials) describes a road reference geometry and comprises one or more reference components 12 (in the present example four reference components for each reference model is provided). Each reference component is associated with a component class, e.g. $A_1$, $A_2$, $A_3$ are associated with the same component class, while $B_1$, $B_2$, $B_3$ are associated with a different component class.

Further, a weight is assigned to each reference component 12, and a weighted sum of each reference component and the assigned weights is formed 4 within each component class. The weighted sum subsequently forms a component candidate 6a, 6b, 6c, 6d having an associated quality value 7a, 7b, 7c, 7d. The component candidates 6a, 6b, 6c, 6d and the assigned quality values 7a, 7b, 7c, 7d are then put into a filter (e.g. dead-reckoning filter) 8 and will form a basis for a master reference model 5 having a corresponding master component 13 for each component class.

Thus, for each sensor data collection (three discrete situations in the illustrated embodiment of Fig. 2), a new component candidate 6a, 6b, 6c, 6d and associated quality value 7a, 7b, 7c, 7d is generated for each component class. The filter 8 may contain a predefined maximum amount of component candidates 6a, 6b, 6c, 6d and associated quality values 7a, 7b, 7c, 7d, so that when a new component candidate 6a, 6b, 6c, 6d is generated, a check can be performed to see if the newly formed component candidate 6a, 6b, 6c, 6d and associated quality value 7a, 7b, 7c, 7d is to be put into the filter or discarded based on one or more predefined criteria (e.g. based on the quality value 7a, 7b, 7c, 7d).

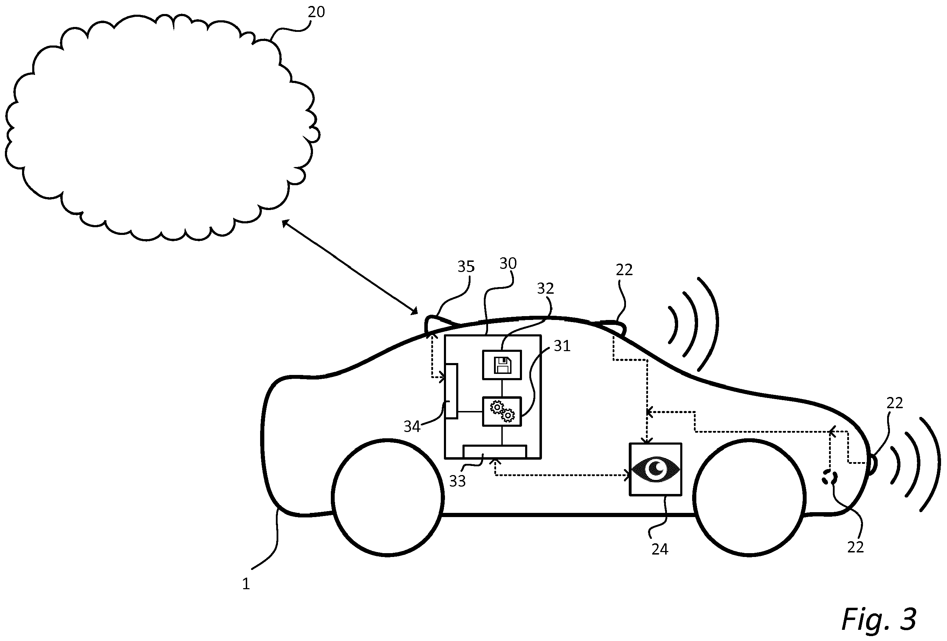

Fig. 3 is a schematic side view illustration of a vehicle 1 comprising a vehicle control device 30 according to an exemplary embodiment of the present disclosure. The vehicle control device 30 has a processor 31, a memory 32, a sensor interface 33 and a communication interface 34. The processor is configured to execute instructions stored in the memory 32 to perform a method for determining a road boundary representation for a vehicle 1 positioned on a road according to any one of the embodiments disclosed herein.

The vehicle 1 has a perception system 24 comprising a plurality of sensors 22 (e.g. cameras, LIDARs, RADARs, ultrasound transducers, etc.). The sensors 22 are configured to acquire information representative of a surrounding environment of the vehicle. In more detail, the perception system comprises sensors suitable for tracking one or more road references (e.g. lane markings, road edges, other vehicles, landmarks, etc.) in order to estimate a road geometry and in particular a road boundary of the travelled upon road.

Further, the processor 31 of the vehicle control device 30 is configured to receive sensor data comprising information about the surrounding environment of the vehicle 1. It should be appreciated that the sensor interface 33 may also provide the possibility to acquire sensor data directly (not shown) or via dedicated sensor control circuitry 24 in the vehicle. The communication/antenna interface 34 may further provide the possibility to send output to a remote location (e.g. remote operator or control centre) 30 by means of the antenna 35. Moreover, some sensors 22 in the vehicle may communicate with the control device 10 using a local network setup, such as CAN bus, I2C, Ethernet, optical fibres, and so on. The communication interface 35 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Further, the processor 11 is configured to form a reference representation model for each of a plurality of road references based on the received sensor data. Each reference representation model is indicative of a road reference geometry and comprises one or more reference components, where each reference component of a reference representation model is associated with a component class. Definitions and examples related to the reference representation models and is considered to be discussed in sufficient detail in the foregoing and will for the sake of brevity and conciseness not be repeated in the following.

Further, the processor 11 is configured to assign a weight to each reference component, and optionally compute a weighted sum, for each component class, based on each reference component and the assigned weights. The weighted sums can then be used to represent a component candidate having an associated quality value which are used in a filter in order to update a master reference model. The master reference model is formed and stored in the memory 32. The master reference model is indicative of the road boundary representation, and comprises a corresponding master component for each component class.

Further, the vehicle 1 may be connected to external network(s) 20 via for instance a wireless link (e.g. for performing a part or all of the computations by means of remote resources). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 31 (associated with the control device 30) may be or include any number of hardware components for conducting data or signal processing or for executing computer code stored in memory 32. The device 30 has an associated memory 32, and the memory 32 may be one or more devices for storing data and/or computer code for completing or facilitating the various methods described in the present description. The memory may include volatile memory or non-volatile memory. The memory 32 may include database components, object code components, script components, or any other type of information structure for supporting the various activities of the present description. According to an exemplary embodiment, any distributed or local memory device may be utilized with the systems and methods of this description. According to an exemplary embodiment the memory 32 is communicably connected to the processor 31 (e.g., via a circuit or any other wired, wireless, or network connection) and includes computer code for executing one or more processes described herein.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to analyse the sensor data to compute the reference representation models. The different features and steps of the embodiments may be combined in other combinations than those described.

Exemplary methods, computer-readable storage media, control devices, vehicles, and infrastructure devices are set out in the following items:

1. A method for determining a road boundary representation for a vehicle positioned on a road, the method comprising:

receiving sensor data comprising information about a surrounding environment of the vehicle;
forming a reference representation model for each of a plurality of road references based on the received sensor data, wherein each reference representation model is indicative of a road reference geometry and comprises at least one reference component, each reference component being associated with a component class;
assigning a weight to each reference component;
forming a master reference model indicative of the road boundary representation, the master reference model comprising a corresponding master component for each component class;
updating the master reference model by updating each master component based on the reference components and the assigned weights within a common component class.

2. The method according to item 1, further comprising generating the road boundary representation based on the master reference model.

3. The method according to item 1 or 2, further comprising:

for each component class, forming a component candidate having an associated quality value based on the reference components and the assigned weights within a common component class;
wherein the step of updating each master component is further based on each formed component candidate and the associated quality value(s) within a common component class.

4. The method according to item 3, wherein the step of forming a component candidate comprises, for each component class, forming a weighted sum of each reference component and the assigned weight within a common component class.

5. The method according to item 3 or 4, further comprising:

populating a filter with a plurality of formed component candidates and associated quality values for each component class;
wherein the step of updating the master reference model is based on the populated filter and a predefined criteria.

6. The method according to item 5, wherein the predefined criteria is a function dependent on the quality values of the plurality of formed component candidates populating the filter.

7. The method according to item 5 or 6, wherein the predefined criteria comprises selecting the component candidate having the highest associated quality value and updating the corresponding master component based on the selected component candidate within a common component class.

8. The method according to any one of items 5 - 7, wherein the filter is a dead-reckoning filter.

9. The method according to any one of the preceding items, wherein the sensor data comprises at least one image of a portion of the surrounding environment of the vehicle.

10. The method according to any one of the preceding items, wherein the assigned quality value is based on at least one of a sensor type, a position of road reference relative to the vehicle, sensor quality data, a tracking time of an associated road reference, a tracking stability of the associated road reference, a tracking status of the associated road reference a reference type, a latency, and an origin of the sensor data.

11. A non-transitory computer-readable storage medium storing one or more programs configured to be executed by one or more processors of a vehicle control system, the one or more programs comprising instructions for performing the method according to any one of the preceding items.

12. A vehicle control device comprising:

at least one processor;

at least one memory;

at least one sensor interface;

wherein the at least one processor is configured to execute instructions stored in the memory to perform a method for determining a road boundary representation for a vehicle positioned on a road, wherein the at least one processor is configured to:

receive sensor data comprising information about a surrounding environment of the vehicle;

form a reference representation model for each of a plurality of road references based on the received sensor data, wherein each reference representation model is indicative of a road reference geometry and comprises at least one reference component, each reference component being associated with a component class;

assign a weight to each reference component;

form a master reference model indicative of the road boundary representation, the master reference model comprising a corresponding master component for each component class;

update the master reference model by updating each master component based on the reference components and the assigned weights within a common component class.

13. The vehicle control device according to item 12, wherein the at least one processor is further configured to, for each component class, form a component candidate having an associated quality value based on the reference components and the assigned weights within a common component class; and

wherein the at least one processor is further configured to update each master component based on each formed component candidate and the associated quality value(s) within a common component class.

14. The vehicle control device according to item 13, wherein the at least one processor is configured to, form a component candidate by forming a weighted sum of each reference component and the assigned weight within a common component class.

15. The vehicle control device according to item 13 or 14, wherein the at least one processor is further configured to:

populate a filter with a plurality of formed component candidates and associated quality values for each component class;

update the master reference model based on the populated filter and a predefined criteria.

16. A vehicle comprising a vehicle control device according to any one of items 12 - 15.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method (100) for determining a road boundary representation for a vehicle positioned on a road, the method comprising:

receiving (101) sensor data comprising information about a surrounding environment of the vehicle;

forming (102) a reference representation model for each of a plurality of road references based on the received sensor data, wherein each reference representation model is indicative of a road reference geometry and comprises at least one reference component, each reference component being associated with a component class;

assigning (103) a weight to each reference component;

forming a master reference model indicative of the road boundary representation, the master reference model comprising a corresponding master component for each component class;

updating (104) the master reference model by updating each master component based on the reference components and the assigned weights within a common component class.

2.  The method (100) according to claim 1, further comprising generating the road boundary representation based on the master reference model.

3.  The method (100) according to claim 1 or 2, further comprising:

for each component class, forming a component candidate having an associated quality value based on the reference components and the assigned weights within a common component class;

wherein the step of updating each master component is further based on each formed component candidate and the associated quality value(s) within a common component class.

4.  The method (100) according to claim 3, wherein the step of forming a component candidate comprises, for each component class, forming a weighted sum of each reference component and the assigned weight within a common component class.

5.  The method (100) according to claim 3 or 4, further comprising:

populating a filter with a plurality of formed component candidates and associated quality values for each component class;

wherein the step of updating the master reference model is based on the populated filter and a predefined criteria.

6.  The method (100) according to claim 5, wherein the predefined criteria is a function dependent on the quality values of the plurality of formed component candidates populating the filter.

7.  The method (100) according to claim 5 or 6, wherein the predefined criteria comprises selecting the component candidate having the highest associated quality value and updating the corresponding master component based on the selected component candidate within a common component class.

8.  The method (100) according to any one of claims 5 - 7, wherein the filter is a dead-reckoning filter.

9.  The method (100) according any one of the preceding claims, wherein the assigned quality value is based on at least one of a sensor type, a position of road reference relative to the vehicle, sensor quality data, a tracking time of an associated road reference, a tracking stability of the associated road reference, a tracking status of the associated road reference a reference type, a latency, and an origin of the sensor data.

10. A non-transitory computer-readable storage medium storing one or more programs configured to be executed by one or more processors of a vehicle control system, the one or more programs comprising instructions for performing the method according to any one of the preceding claims.

11. A vehicle control device (30) comprising:
at least one processor (31) configured to execute instructions stored in a memory (32) to perform a method for determining a road boundary representation for a vehicle positioned on a road, wherein the at least one processor is configured to:

receive sensor data comprising information about a surrounding environment of the vehicle;

form a reference representation model for each of a plurality of road references based on the received sensor data, wherein each reference representation model is indicative of a road reference geometry and comprises at least one reference component, each reference component being associated with a component class;

assign a weight to each reference component;

form a master reference model indicative of the road boundary representation, the master reference model comprising a corresponding master component for each component class;

update the master reference model by updating each master component based on the reference components and the assigned weights within a common component class.

12. The vehicle control device (30) according to claim 11, wherein the at least one processor is further configured to, for each component class, form a component candidate having an associated quality value based on the reference components and the assigned weights within a common component class; and

wherein the at least one processor is further configured to update each master component based on each formed component candidate and the associated quality value(s) within a common component class.

13. The vehicle control device (30) according to claim 12, wherein the at least one processor is configured to, form a component candidate by forming a weighted sum of each reference component and the assigned weight within a common component class.

14. The vehicle control device (30) according to claim 12 or 13, wherein the at least one processor is further configured to:

populate a filter with a plurality of formed component candidates and associated quality values for each component class;

update the master reference model based on the populated filter and a predefined criteria.

15. A vehicle (1) comprising a vehicle control device (30) according to any one of claims 11 - 14.

101

Receive sensor data

102

Form a reference
representation model
for each road reference

$\iff$ $y_i = A_i x^3 + B_i x^2 + C_i x + D_i$

103

Assign a weight to each
reference component

$A_i \omega_{ai}$
$B_i \omega_{bi}$
$C_i \omega_{ci}$
$D_i \omega_{di}$

105

Form a weighted sum
for each component
class

$\iff$ $\begin{cases} \sum A_i \omega_{ai} \\ \cdots \\ \sum D_i \omega_{di} \end{cases}$

106

Form a component
candidate

$\iff$ $\begin{cases} \sum A_i \omega_{ai} = A, Q_A \\ \cdots \\ \sum D_i \omega_{di} = D, Q_D \end{cases}$

107

Populate a filter

104

Update master master
reference model

$y_M = A_M x^3 + B_M x^2 + C_M x + D_M$

$A_{C1}, Q_{AC1}$

$A_{C2}, Q_{AC2}$

$A_{C3}, Q_{AC3}$
$\vdots$

$\cdots$

$D_{C1}, Q_{DC1}$

$D_{C2}, Q_{DC2}$

$D_{C3}, Q_{DC3}$
$\vdots$

Extract road boundary
representation based
on master reference
model

108

*Fig. 1*

100

12

**Fig. 2**

*Fig. 3*

Europäisches
Patentamt

European
Patent Office

Office européen
des brevets

# EUROPEAN SEARCH REPORT

Application Number

EP 19 16 6239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/261327 A1 (OLSSON CLAES [SE] ET AL) 14 September 2017 (2017-09-14) * figures 1-3,5,6 * * paragraph [0012] * * paragraph [0048] - paragraph [0062] * ----- | 1-15 | INV. G06K9/00 G06K9/46 |
| X | US 5 922 036 A (YASUI NOBUHIKO [JP] ET AL) 13 July 1999 (1999-07-13) * figures 1,2,4,5,7 * * column 5, line 18 - column 6, line 4 * * column 6, line 45 - column 7, line 20 * ----- | 1-15 | |

TECHNICAL FIELDS
SEARCHED (IPC)

G06K

The present search report has been drawn up for all claims

| Place of search | Date of completion of the search | Examiner |
|---|---|---|
| The Hague | 6 September 2019 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................
& : member of the same patent family, corresponding document

EPO FORM 1503 03.82 (P04C01)

**EP 3 716 138 A1**

## ANNEX TO THE EUROPEAN SEARCH REPORT
## ON EUROPEAN PATENT APPLICATION NO.

EP 19 16 6239

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2019

| Patent document cited in search report | | | Publication date | Patent family member(s) | | | Publication date |
|---|---|---|---|---|---|---|---|
| US 2017261327 | A1 | | 14-09-2017 | CN | 107176167 | A | 19-09-2017 |
| | | | | EP | 3217374 | A1 | 13-09-2017 |
| | | | | US | 2017261327 | A1 | 14-09-2017 |
| US 5922036 | A | | 13-07-1999 | DE | 69705994 | D1 | 13-09-2001 |
| | | | | DE | 69705994 | T2 | 04-04-2002 |
| | | | | DE | 69734477 | D1 | 01-12-2005 |
| | | | | DE | 69734477 | T2 | 20-07-2006 |
| | | | | DE | 69734736 | D1 | 29-12-2005 |
| | | | | DE | 69734736 | T2 | 06-07-2006 |
| | | | | EP | 0810569 | A1 | 03-12-1997 |
| | | | | EP | 1143396 | A2 | 10-10-2001 |
| | | | | EP | 1143397 | A2 | 10-10-2001 |
| | | | | EP | 1143398 | A2 | 10-10-2001 |
| | | | | JP | 3556766 | B2 | 25-08-2004 |
| | | | | JP | H09319872 | A | 12-12-1997 |
| | | | | KR | 970076404 | A | 12-12-1997 |
| | | | | US | 5922036 | A | 13-07-1999 |

EPO FORM P0459

For more details about this annex : see Official Journal of the European Patent Office, No. 12/82

**16**